# EUROPÄISCHE PATENTSCHRIFT

(11) **EP 2 677 269 B1**
(45) Veröffentlichungstag und Bekanntmachung des Hinweises auf die Patenterteilung: **01.04.2020**
(21) Anmeldenummer: 13184496.1
(22) Anmeldetag: 11.12.2009
(51) Int. Cl.: G01B 3/06, F16C 11/10

(54) **Gliedermaßstab**
Folding rule
Mètre pliant

(30) Priorität: 04.02.2009 DE 102009007556
(43) Veröffentlichungstag der Anmeldung: 25.12.2013
(62) Teilanmeldung aus: 09178803.4
(73) Patentinhaber: Adga Adolf Gampper GmbH, 74535 Mainhardt (DE)
(72) Erfinder: Gampper, Gerald, 74535 Mainhardt (DE)
(74) Vertreter: Gauss, Nikolai

(56) Entgegenhaltungen:
- EP-A2- 0 174 508
- WO-A1-2006/086933
- DE-C- 14 289
- US-A- 1 983 651
- US-A- 2 655 730

## Beschreibung

Die Erfindung betrifft einen Gliedermaßstab mit langgestreckten flachen Gliedern, die paarweise gelenkig verbunden sind, bei dem eine Gelenkverbindung mit einer Drehachse eine erste Gelenkplatte aufweist, die an einem ersten Glied festgelegt ist und die eine zweite Gelenkplatte umfasst, welche an einem zweiten Glied befestigt ist, wobei an der ersten Gelenkplatte eine Federzunge mit einem Rastabschnitt ausgebildet ist, der mit einem ersten komplementären Rastabschnitt und mit einem zweiten komplementären Rastabschnitt an der zweiten Gelenkplatte zusammenwirkt, um die Gelenkverbindung in einer ersten Einstellung und in einer von der ersten Einstellung verschiedenen zweiten Einstellung mittels Federkraft zu rasten, wenn das erste Glied relativ zu dem zweiten Glied um die Drehachse geschwenkt wird.

Ein Gliedermaßstab der eingangs genannten Art ist aus der DE 2 037 063 A bekannt. Dort ist ein Gliedermaßstab beschrieben, dessen Glieder in einer eingefalteten Stellung und in einer ausgefalteten Stellung rasten. Hierzu sind jeweils zwei Glieder des Gliedermaßstabs durch eine Gelenkverbindung verbunden, die eine erste und eine zweite Gelenkplatte sowie einen Nietbolzen aufweist. Die Gelenkplatten sind an unterschiedlichen Gliedern des Maßstabs festgelegt. Sie werden von dem Nietbolzen durchsetzt. Die eine Gelenkplatte hat zwei Federzungen mit einem Rastabschnitt in Form einer Erhebung. In der anderen Gelenkplatte gibt es zwei Vertiefungen, die als komplementäre Rastabschnitte wirken. Die beiden Federzungen mit der Erhebung an der einen Gelenkplatte liegen zu beiden Seiten des Nietbolzens auf der Längsachse des Maßstabglieds, an dem die Gelenkplatte festgelegt ist. Die Vertiefungen der anderen Gelenkplatte befinden sich entsprechend auf der Längsachse des anderen Maßstabglieds links und rechts von dem Nietbolzen. Die Gelenkverbindung rastet, wenn eine Erhebung an den Federzungen der einen Gelenkplatte mit der entsprechenden Vertiefung an der anderen Gelenkplatte in Eingriff gerät. So wird eine exakt fluchtende Lage der Maßstabglieder gewährleistet, wenn die Maßstabglieder ausgefaltet sind. Das gewährleistet eine hohe Messgenauigkeit beim Messen mit dem Gliedermaßstab.

Ein ähnlicher Gliedermaßstab ist in der WO 2006/086933 A1 und in der DE 14289 C beschrieben.

Für das Vermessen von kleinen oder schwer zugänglichen Messobjekten wird ein Gliedermaßstab häufig nur teilweise ausgefaltet. Hier ist es günstig, wenn ein oder mehrere Maßstabglieder, die exakt fluchten, mit einem oder mehreren anderen Gliedern des Gliedermaßstabs in einer definierten Position an das Messobjekt angelegt werden können.

Aufgabe der Erfindung ist es, einen Gliedermaßstab bereitzustellen, bei dem eine stabile Zwischenposition einer Gelenkverbindung für zwei Maßstabsglieder in einer abgewinkelten Stellung zwischen einer eingefalteten und einer ausgefalteten Stellung der Glieder des Maßstabs eingestellt werden kann.

Diese Aufgabe wird durch einen Gliedermaßstab mit den Merkmalen von Anspruch 1 gelöst.

Vorteilhafte Weiterbildungen der Erfindung sind in den abhängigen Ansprüchen angegeben.

Der erfindungsgemäße Gliedermaßstab ist derart ausgebildet, dass bei einem Schwenken des ersten Glieds relativ zu dem zweiten Glied der an der Federzunge der ersten Gelenkplatte ausgebildete Rastabschnitt mit dem zweiten komplementären Rastabschnitt an der zweiten Gelenkplatte die Gelenkverbindung zwischen einer eingefalteten und einer ausgefalteten Stellung der Glieder in einer abgewinkelten Stellung rastet.

Hierfür kann an der ersten Gelenkplatte eine erste Federzunge mit einem Rastabschnitt und eine zweite Federzunge mit einem Rastabschnitt ausgebildet sein, die jeweils mit zwei ersten komplementären Rastabschnitten und mit zwei zweiten komplementären Rastabschnitten an der zweiten Gelenkplatte zusammenwirken, um die Gelenkverbindung in einer ersten Einstellung und in einer von der ersten Einstellung verschiedenen zweiten Einstellung mittels Federkraft zu rasten, wenn das erste Glied relativ zu dem zweiten Glied um die Drehachse geschwenkt wird. Bei einem Schwenken des ersten Glieds relativ zu dem zweiten Glied rastet der an der ersten und der zweiten Federzunge der ersten Gelenkplatte ausgebildete Rastabschnitt mit dem zweiten komplementären Rastabschnitt an der zweiten Gelenkplatte die Gelenkverbindung zwischen einer eingefalteten und einer ausgefalteten Stellung der Glieder in einer abgewinkelten Stellung.

Die erste Federzunge und/oder die zweite Federzunge hat einen Rastabschnitt mit einer Deckenfläche und mit schrägen, zu einer Längskante des Gliedes weisenden Seitenflächen, der bei einem Rasten in einem der ersten komplementären Rastabschnitte an der zweiten Gelenkplatte mit der Deckenfläche und mit den Seitenflächen in den entsprechenden ersten komplementären Rastabschnitt eingreift und der bei einem Rasten in einem der zweiten komplementären Rastabschnitte nur mit dem Abschnitt der Deckenfläche in dem entsprechenden zweiten komplementären Rastabschnitt an der zweiten Gelenkplatte rastet.

Damit lässt sich erreichen, dass die Gelenkverbindung bei einem Rasten des Rastabschnitts der ersten Federzunge und/oder der zweiten Federzunge in einem der ersten komplementären Rastabschnitte vergleichsweise stark rastet, und bei einem Rasten des Rastabschnitts der ersten Federzunge und/oder der zweiten Federzunge in einem der zweiten komplementären Rastabschnitte nur schwach.

Eine Besonderheit der Erfindung liegt deshalb darin, dass der erste und der zweite komplementäre Rastabschnitt an der zweiten Gelenkplatte auf einer Kreisbahn um die Drehachse der Gelenkverbindung liegt. In Bezug auf die Drehachse der Gelenkverbindung stehen dabei der erste und der zweite komplementäre Rastabschnitt zueinander in einem stumpfen Winkel oder einem spitzen Winkel, vorzugsweise in einem Winkel *ϕ* = ±90°, d.h. einem rechten Winkel.

Eine bevorzugte Ausgestaltung der Erfindung sieht vor, dass der zweite komplementäre Rastabschnitt eine seitliche Aussparung in der zweiten Gelenkplatte ist. Vorzugsweise ist diese seitliche Aussparung rechteckförmig.
Alternativ hierzu kann der zweite komplementäre Rastabschnitt auch als eine Vertiefung am Umfangsbereich der zweiten Gelenkplatte ausgebildet sein. Diese Vertiefung hat vorzugsweise die Form einer Wanne mit einer konkav gekrümmten Bodenfläche. Die Bodenfläche der wannenartigen Vertiefung kann aber auch eben sein. Es ist auch möglich, die Vertiefung mit einer Durchbrechung auszuführen. Eine solche Vertiefung kann beispielsweise durch Stanzen einer ebenen Gelenkplatte mit einem geeigneten Stanzwerkzeug erzeugt werden. Es ist auch möglich, den zweiten komplementären Rastabschnitt als eine runde oder als eine eckige Einschlifffase am Umfangsbereich der zweiten Gelenkplatte auszuführen.

Der Rastabschnitt an der Federzunge ist eine Erhebung. Es ist günstig, diese Erhebung als Pyramidenstumpf auszubilden, der eine zur Drehachse der Gelenkverbindung weisende langgestreckte schräge Flanke hat.

Auch der erste komplementäre Rastabschnitt in der zweiten Gelenkplatte ist vorzugsweise als Vertiefung ausgebildet. Hier ist es ebenfalls günstig, wenn diese Vertiefung die Form eines Pyramidenstumpfes mit einer zur Drehachse der Gelenkverbindung weisenden langgestreckten schrägen Flanke hat. Eine bevorzugte Ausführungsform der Erfindung sieht vor, dass der zweite komplementäre Rastabschnitt zur Deckfläche des Pyramidenstumpfes komplementär gestaltet ist.

Indem in dem ersten Glied eine wannenartige Ausnehmung vorgesehen ist, in welche die Federzunge mit Rastabschnitt bei einem Verstellen der Gelenkverbindung eintauchen kann, lässt sich erreichen, dass die Glieder des Gliedermaßstabs eng aneinanderliegen, wenn der Gliedermaßstab zusammengefaltet ist. Eine zusätzliche wannenartige Ausnehmung in dem zweiten Glied ermöglicht das Versenken von Rastabschnitten in der zweiten Gelenkplatte. Vorzugsweise hat das erste Glied des Gliedermaßstabs außerdem eine Versenkungsvertiefung für die erste Gelenkplatte. Von Vorteil ist es, wenn in dem zweiten Glied entsprechend eine Versenkungsvertiefung für die zweite Gelenkplatte ausgebildet ist. Hierdurch wird erreicht, dass die Glieder des Maßstabs im zusammengefalteten Zustand so aneinander liegen, dass die beiden Gelenkplatten einer Gelenkverbindung verborgen sind. Damit bietet der zusammengefaltete Gliedermaßstab zwei homogene rechteckige Seitenflächen, die sich hervorragend für Werbeaufdrucke eignen.

Ein Stegabschnitt an den Gliedern des Gliedermaßstabs im Bereich einer Durchgangsbohrung für einen Nietbolzen der Gelenkverbindung bewirkt eine hohe mechanische Belastbarkeit des Gliedermaßstabs im Bereich der Gelenkverbindung. Das gewährleistet, dass der Maßstab trotz der wannenartigen Vertiefungen im Bereich der Gelenkverbindung stabil ist und er dort nicht leicht brechen kann.

Im Folgenden wird die Erfindung anhand der in der Zeichnung in schematischer Weise dargestellten Ausführungsbeispiele näher erläutert. Es zeigen
- Fig. 1: eine Seitenansicht eines Gliedermaßstabs mit einem ausgeschwenkten Maßstabglied;
- Fig. 2a und b: zwei gelenkig verbundene Glieder des Gliedermaßstabs in einer ausgefalteten und in einer abgewinkelten Raststellung;
- Fig. 3: eine Explosionsdarstellung der Gelenkverbindung von zwei Gliedern des Gliedermaßstabs;
- Fig. 4a, b und c: Ansichten einer ersten Gelenkplatte der Gelenkverbindung;
- Fig. 5a, b und c: Ansichten einer zweiten Gelenkplatte der Gelenkverbindung;
- Fig. 6: einen Schnitt der Gelenkverbindung in ausgefalteter Raststellung;
- Fig. 7: einen Schnitt der Gelenkverbindung entlang der Linie VII-VII aus Fig. 6;
- Fig. 8: eine Draufsicht der Gelenkverbindung in abgewinkelter Raststellung;
- Fig. 9: einen Schnitt der Gelenkverbindung entlang der Linie IX-IX aus Fig. 8.
- Fig. 10: eine erste alternative Ausführungsform der zweiten Gelenkplatte in der Gelenkverbindung;
- Fig. 11: einen vergrößerten Schnitt der zweiten Gelenkplatte entlang der Linie XI-XI aus Fig. 10; und
- Fig. 12a bis e: Schnitte von Rastabschnitten weiterer alternativer Ausführungsformen der zweiten Gelenkplatte.

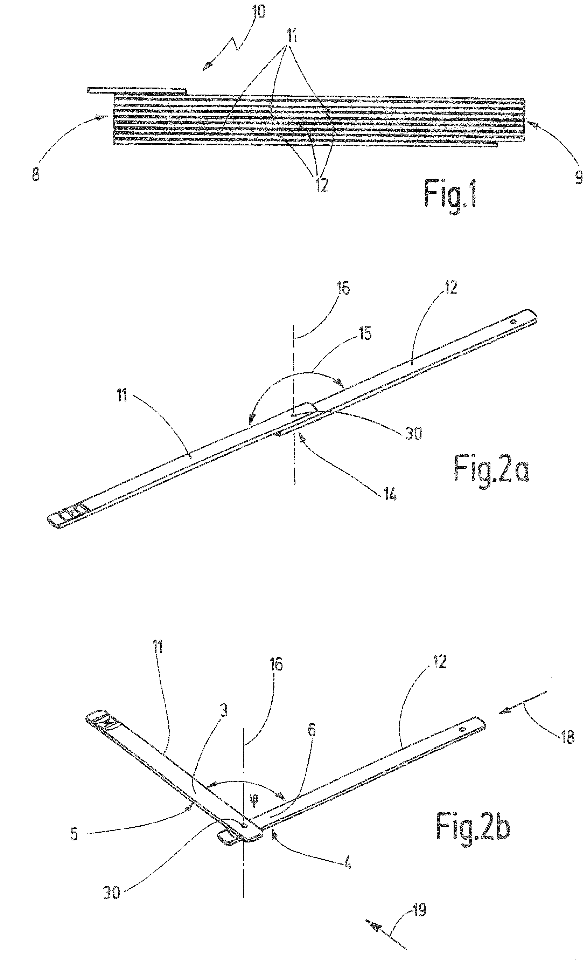

Der Gliedermaßstab 10 in Fig. 1 hat langgestreckte flache Glieder 11,12, die aus Holz bestehen. Die Glieder 11,12 sind in der Nähe ihrer Gliedenden im Abstand der stirnseitigen Enden 8, 9 paarweise gelenkig verbunden. Die eingefalteten Glieder 11,12 des Gliedermaßstabs 10 liegen quasi ohne Luftspalt eng aneinander. Die eingefalteten Glieder des Gliedermaßstabs 10 bilden damit zwei Flächen, die homogen erscheinen und für großflächige Werbeaufdrucke geeignet sind.

Die Fig. 2a zeigt ein Glied 11 und ein Glied 12 des Gliedermaßstabs 10. Die Glieder 11,12 sind durch eine Gelenkverbindung 14 verbunden. Die Gelenkverbindung 14 ermöglicht ein Verschwenken des Glieds 11 entsprechend dem Doppelpfeil 15 relativ zum dem Glied 12 um die Drehachse 16. Die Glieder 11,12 sind hier in einer ausgefalteten Schwenkstellung, in der die Gelenkverbindung 14 rastet.

Die Gelenkverbindung 14 hat einen Nietbolzen 30. Der Nietbolzen 30 greift durch miteinander fluchtende Bohrungen in den Gliedern 11,12 hindurch. Er stützt sich mit seinen Köpfen in Vertiefungen an den Breitseitenflächen 3,4 der Glieder 11,12 ab. An ihren einander zugewandten Breitseitenflächen 5,6 werden die Glieder 11,12 durch den Nietbolzen 30 zusammengedrückt.

In Fig. 2b sind die Glieder 11,12 in einer abgewinkelten Schwenkstellung gezeigt: Hier steht das Glied 11 unter einem rechten Winkel *ϕ* = 90° zu dem Glied 12. Auch in dieser Schwenkposition rastet die Gelenkverbindung 14. Weitere Rastungen der Gelenkverbindung 14 gibt es bei Übereinanderliegen der Glieder 11,12 in der mit dem Pfeil 18 angedeuteten Schwenkposition *ϕ* = 0 und in der Schwenkposition entsprechen Pfeil 19 bei *ϕ* = -90°.

Die Gelenkverbindung 14 hat eine erste Gelenkplatte 21 und eine zweite Gelenkplatte 24. Die erste Gelenkplatte 21 besteht vorzugsweise aus gehärtetem Federstahl. An der Gelenkplatte 21 sind als Krallen wirkende Zacken 22 ausgebildet. Mittels dieser Zacken 22 ist die Gelenkplatte 21 im Holz des Gliedes 11 verankert.

Auch die zweite Gelenkplatte 24 ist vorzugsweise in gehärtetem Federstahl ausgeführt. Sie hat Zacken 25, mit denen sie im Holz von Glied 12 befestigt sind.

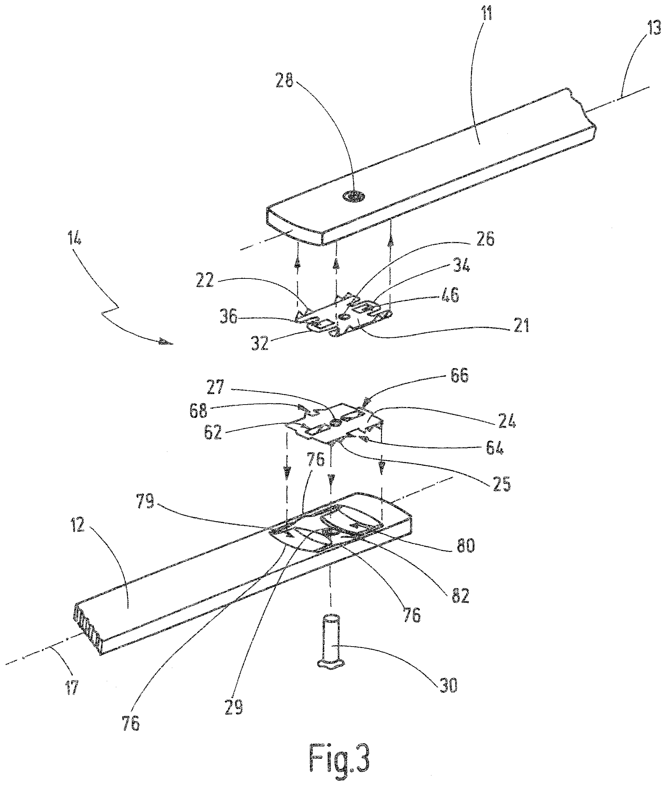

Wie die Fig. 3 zeigt, haben die Gelenkplatten 21,24 jeweils eine mittige Bohrung 26,27. Diese Bohrungen 26,27 fluchten mit den entsprechenden Bohrungen 28,29 in den Gliedern 11,12 für den Nietbolzen 30.

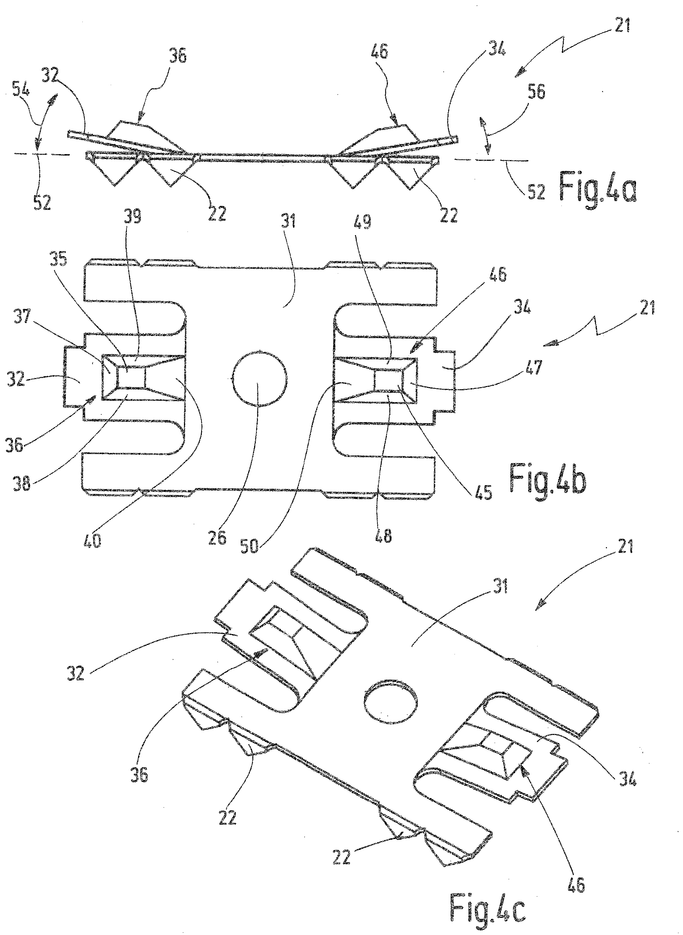

Die erste Gelenkplatte 21 ist in Fig. 4a in Seitenansicht, in Fig. 4b in Draufsicht und in Fig. 4c in perspektivischer Ansicht gezeigt. Die erste Gelenkplatte 21 hat eine Mittenpartie 31, an die zwei Federzungen 32,34 anschließen. An den beiden Federzungen 32,34 gibt es jeweils einen Rastabschnitt 36,46. Die Rastabschnitte 36,46 sind als Erhebung in der Form eines Pyramidenstumpfs gestaltet. Der Pyramidenstumpf 36 und der Pyramidenstumpf 46 haben eine Deckfläche 35 und eine Deckfläche 45. Von den Dachflächen 35,45 verläuft eine langgestreckte Auflaufschräge 40,50 hinab zur Mittenpartie 31 der Gelenkplatte 21. Mittels der Zacken 22 ist die Gelenkplatte 21 so im Holz des Gliedes 11 verankert, dass die beiden Federzungen 32,34 zu beiden Seiten das in Fig. 3 gezeigten Nietbolzens 30 auf der Längsachse 13 von Glied 11 liegen.

Mit den schrägen Seitenflächen 37,38,39 bzw. 47,48,49 erhebt sich der Pyramidenstumpf 36 und der Pyramidenstumpf 46 aus der Federzunge 32 bzw. 34. Im unbelasteten Zustand ragen die Federzungen 32,34 gegenüber der Ebene 52 der Gelenkplatte 21 schräg nach oben. Die Federzungen 32,34 können eine mittels der Doppelpfeile 54,56 angedeutete Federbewegung ausführen.

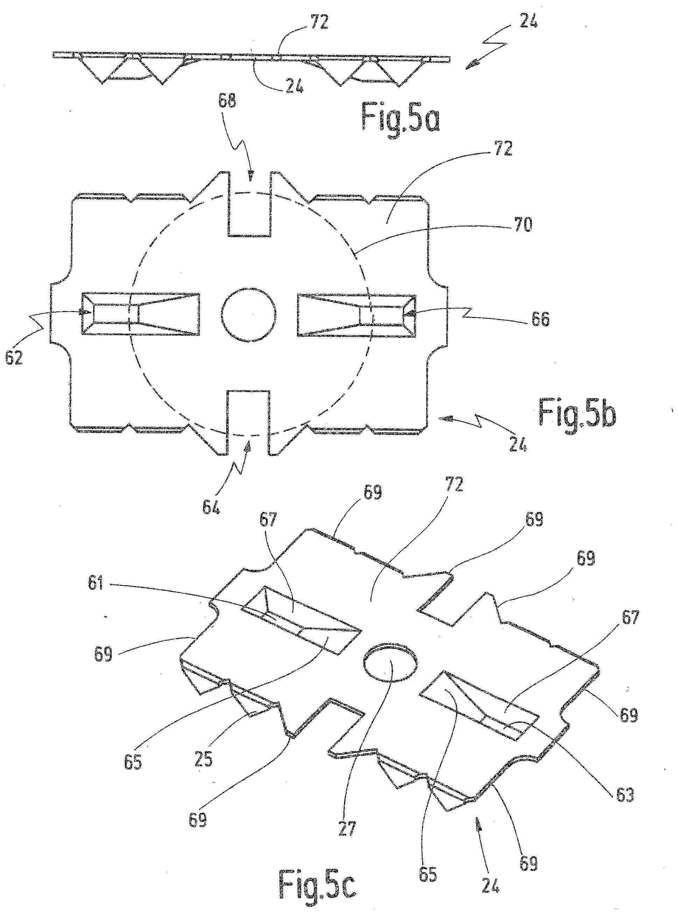

Fig. 5a zeigt entsprechend die zweite Gelenkplatte 24 in Seitenansicht, Fig. 5b in Draufsicht und Fig. 5c in perspektivischer Ansicht. Die zweite Gelenkplatte 24 hat einen ersten, zweiten, dritten und vierten Rastabschnitt 62,64,66 und 68. Die vier Rastabschnitte 62,64,66,68 sind symmetrisch auf einer Kreisbahn 70 um die mittige Bohrung 27 in der Gelenkplatte 24 angeordnet. Mittels der Zacken 25 ist die Gelenkplatte 21 so im Holz des Gliedes 12 verankert, dass, wie die Fig. 3 zeigt, der erste und der dritte Rastabschnitt 62,66 zu beiden Seiten des Nietbolzens 30 auf der Längsachse 17 von Glied 12 liegen.

An dem Glied 12 des Gliedermaßstabs ist der erste und dritte Rastabschnitt 62,66 also mittig angeordnet. Der zweite und vierte Rastabschnitt 64,68 weist demgegenüber jeweils zu einer Längskante des Glieds 12: Der zweite und vierte Rastabschnitt 64, 68 ist in Bezug auf die Drehachse 16 der Gelenkverbindung 14 zu dem ersten und dem vierten Rastabschnitt 64,68 auf der Kreisbahn 70 um die Bohrung 27 der Gelenkplatte 24 in einem rechten Winkel angeordnet. Der erste und dritte Rastabschnitt 62,66 ist komplementär zu den Erhebungen der Pyramidenstümpfe 36,46 der ersten Gelenkplatte 21 als pyramidenstumpfförmige Vertiefung geformt. Die jeweilige Vertiefung hat eine Bodenfläche 61,63, zu der sich schräge Seitenflächen 65,67 absenken. Die Rastabschnitte 64 und 68 sind als Ausnehmung bzw. Aussparung im Umfangsbereich 69 der Grundplatte gestaltet. Diese Ausnehmung kann beispielsweise durch Ausstanzen mit einem Stanzwerkzeug hergestellt werden.

Die Rastabschnitte 62,64,66,68 sind komplementäre Rastabschnitte zu den an den beiden Federzungen 32,34 ausgebildeten Rastabschnitten 36,46 der ersten Gelenkplatte 21: Die Deckfläche der Pyramidenstümpfe 36,46 wird unter Wirkung einer Federkraft der Federzungen 32,34 der ersten Gelenkplatte 21 gegen die Oberfläche der zweiten Gelenkplatte 24 gedrückt. Bei einem Verstellen der Gelenkverbindung 14 um die Drehachse 16 werden die Deckflächen 35,45 der Pyramidenstümpfe 36,46 entlang der Kreisbahn 70 über die Oberfläche 72 der zweiten Gelenkplatte 24 bewegt. Wenn dabei die an den Federzungen 32,34 der ersten Gelenkplatte 21 ausgebildeten pyramidenstumpfförmigen Rastabschnitte 36,46 an den Rastabschnitten 62 oder 68 bzw. 64 oder 66 der zweiten Gelenkplatte 24 liegen, geraten die Rastabschnitte 36,46 der ersten Gelenkplatte 21 mit den Rastabschnitten 62 und 66 oder mit den Rastabschnitten 64 und 68 der zweiten Gelenkplatte 24 in Eingriff. Indem die Rastabschnitte 32 und 46 der ersten Gelenkplatte 21 in die Rastabschnitte 62 und 66 der zweiten Gelenkplatte 24 eingreifen, wird eine Rastung der Gelenkanordnung 14 in einer ein- oder ausgefalteten Stellung der Glieder 11,12 des Gliedermaßstabs bewirkt. Wenn die Rastabschnitte 64 und 68 der zweiten Gelenkplatte 24 mit den Rastabschnitten 36 und 46 der ersten Gelenkplatte 21 in Eingriff geraten, rastet die Gelenkverbindung 14 in einer Stellung, bei der die Glieder 11,12 des Gliedermaßstabs um einen Winkel *ϕ* = ±90° zueinander verschwenkt sind.

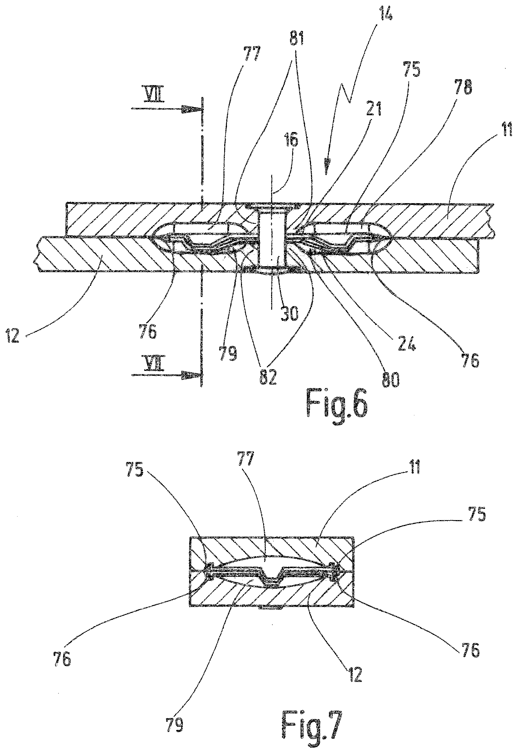

Die Fig. 6 zeigt einen Schnitt der Gelenkverbindung 14 in einer ausgefalteten Stellung der Glieder 11,12. Beide Enden des Nietbolzens 30 sind in einer Versenkung 71,72 aufgenommen. Der an der Federzunge 32 ausgebildete Pyramidenstumpf 36 an der Gelenkplatte 21 ist hier mit dem komplementären, als Vertiefung ausgebildeten Rastabschnitt 62 an der Gelenkplatte 24 ohne Spiel in Eingriff. Entsprechendes gilt für den Pyramidenstumpf 46 an der Federzunge 34 der Gelenkplatte 21 und dem hierzu komplementären Rastabschnitt 66 an der Gelenkplatte 24. Hierdurch wird eine präzise Rastung der Gelenkverbindung erreicht.

Die Gelenkplatte 21 ist in dem Glied 11 versenkt, die Gelenkplatte 24 in dem Glied 12. An dem Glied 11 ist hierzu eine Versenkungsvertiefung 75 für die Gelenkplatte 21 ausgebildet. Entsprechend gibt es eine Versenkungsvertiefung 76 an dem Glied 12 für die Gelenkplatte 24. In der Versenkungsvertiefung 75 gibt es zusätzlich eine erste und eine zweite wannenartige Ausnehmung 77,78. Die Versenkungsvertiefung 76 an dem Glied 12 hat zwei entsprechende wannenartig geformte, vertiefte Ausnehmungen 79,80.

Zwischen der ersten wannenartigen Ausnehmung 77 und der zweiten wannenartigen Ausnehmung 78 hat das Glied 11 im Bereich der Gelenkverbindung 14 einen Stegabschnitt 81. Entsprechend ist an dem Glied 12 zwischen der ersten wannenartigen Ausnehmung 79 und der zweiten wannenartigen Ausnehmung 80 ein Stegabschnitt 82 ausgebildet. Diese Stegabschnitte 81,82 bewirken eine gute Stabilität der Gelenkverbindung 14 im Bereich des Nietbolzens 30, trotz der Schwächung des Materials der Glieder 11,12 aufgrund der wannenartigen Ausnehmungen 77,78 und 79,80.

Fig. 7 zeigt einen Schnitt der Gelenkverbindung 14 entlang der Linie VII-VII aus Fig. 6. Die wannenartigen Ausnehmungen 77,78 nehmen die Federzungen 32,34 mit den daran geformten Rastabschnitten 36,46 auf, wenn das Glied 11 zu dem Glied 12 in der Gelenkverbindung 14 aus einem zusammengefalteten oder einer ausgefalteten Stellung geschwenkt wird. In den wannenartigen Ausnehmungen 79,80 sind die vertieft geformten Rastabschnitte 62 und 66 der zweiten Gelenkplatte 24 versenkt. Die Gelenkverbindung 14 ermöglicht so ein flächiges Aneinanderliegen von Glied 11,12.

Die schrägen Seitenflächen 38,39 des Rastabschnitts 36 der Gelenkplatte 21 und die komplementäre Form von Rastabschnitt 62 der zweiten Gelenkplatte 24 gewährleistet einerseits das weiche Ein- und Ausrasten der Gelenkverbindung 14 bei einem Schwenken der Glieder 11,12 und andererseits, dass die Gelenkverbindung ab einer bestimmten Öffnungsstellung der Glieder 11, 12 mittels Federkraft von selbst in die Raststellung bewegt wird.

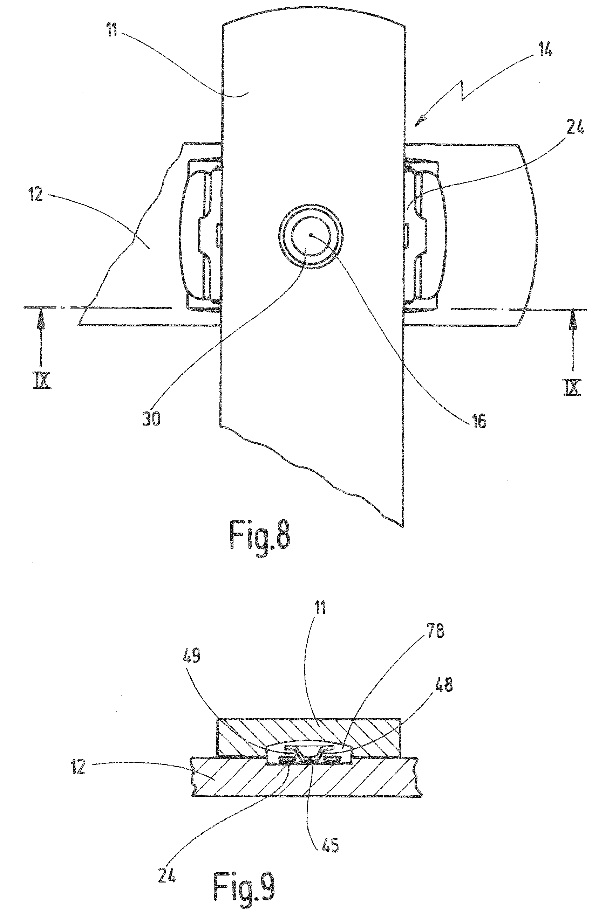

In Fig. 8 ist die Gelenkverbindung 14 in abgewinkelter 90°-Schwenkposition dargestellt. Hier wirken die Rastabschnitte 36,46 der Gelenkplatte mit den als Aussparungen im Randbereich geformten Rastabschnitten 64,68 der zweiten Gelenkplatte zusammen.

Die Fig. 9 zeigt einen Schnitt der Gelenkverbindung 14 aus Fig. 8 entlang der Linie IX-IX. Die Federzunge 34 der ersten Gelenkplatte 21 taucht hier mit dem Abschnitt der Deckfläche 45 des pyramidenförmigen Rastabschnitts 46 in die Ausnehmung 64 der zweiten Gelenkplatte 24. Die Federzunge 34 mit dem pyramidenförmigen Rastabschnitt 46 ist dabei in der wannenartigen Ausnehmung 78 in dem Glied 11 aufgenommen. Die schrägen Seitenflächen 48,49 des Rastabschnitts 46 ermöglichen auch hier einerseits ein sanftes Ein- und Ausrasten aus der Raststellung. Andererseits bewirken die schrägen Seitenflächen 48,49 des Rastabschnitts 46 auch hier wiederum, dass die Gelenkverbindung durch die Kraft der Federzungen 32, 34 in die Raststellung bewegt wird, wenn die Glieder 11, 12 in einem Winkel zueinander stehen, der nur wenig von einem rechten Winkel abweicht.

Da der Rastabschnitt 46 nur mit dem Abschnitt der Deckfläche 45 mit der Aussparung 64 an der zweiten Gelenkplatte 24 zusammenwirkt, ist die Rastung von Rastabschnitt 46 der zweiten Gelenkplatte 24 in dem Rastabschnitt 64 weniger stark als die Rastung im Rastabschnitt 62. Entsprechendes gilt für die Rastung von Rastabschnitt 36 mit der Aussparung 68, die als vierter komplementärer Rastabschnitt in der zweiten Gelenkplatte 24 wirkt. Damit wird erreicht, dass die Gelenkverbindung 14 bei ausgefalteter und zusammengefalteter Stellung der Glieder 11,12 vergleichsweise stark rastet, in den abgewinkelten 90°-Schwenkpositionen dagegen nur schwach.

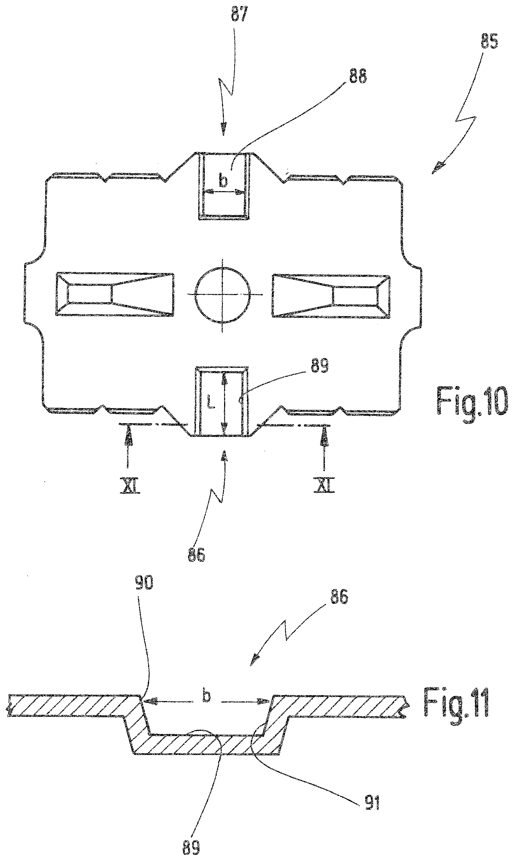

Die Fig. 10 zeigt eine alternative Ausführung 85 für die zweite Gelenkplatte der Gelenkverbindung 14. Hier sind zweite und vierte komplementäre Rastabschnitte 86,87 vorgesehen, die als Wanne bzw. Rinne 88,89 mit eckigen Kanten gestaltet sind. Im Übrigen entspricht die alternative Ausführung 85 für die zweite Gelenkplatte 24, die in Fig. 5a, b und c gezeigt ist

Fig. 11 zeigt einen vergrößerten Schnitt der Gelenkplatte 85 entlang der Linie XI-XI aus Fig. 10. Die Wanne 89 hat eine ebene Bodenfläche und schräge Seitenflächen 90,91. Die Form der Wanne bzw. Rinne 89 entspricht der Kontur des Abschnitts der Rastabschnitte 36,46 an Federzungen 32,34 der ersten Gelenkplatte 21 im Bereich der Deckfläche 35,45 der pyramidenstumpfförmigen Erhebung.

Nachfolgend sind weitere mögliche Geometrien für zweite und vierte komplementäre Rastabschnitte bei einer alternativen Ausführungsform für die zweite Gelenkplatte der Gelenkverbindung anhand von Schnitten erläutert, die dem in Fig. 11 abgebildeten Schnitt entsprechen.

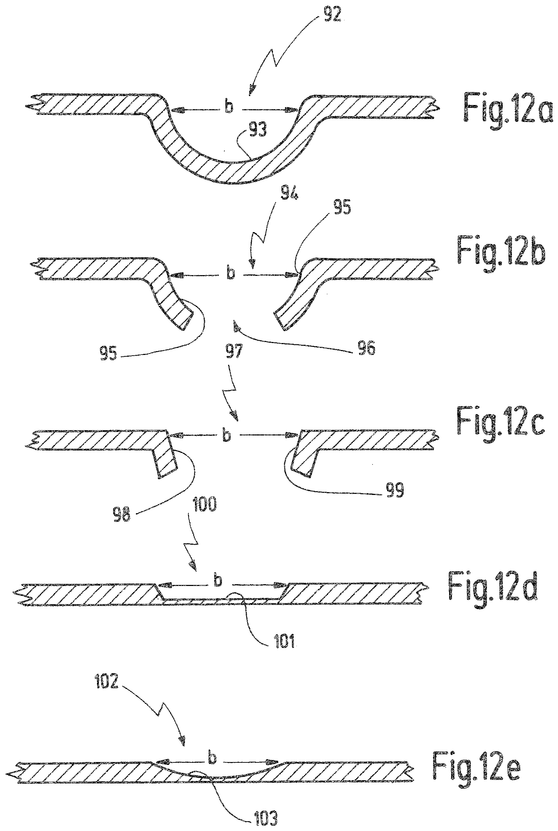

Die Fig. 12a zeigt einen Rastabschnitt 92 in der Form einer runden Wanne bzw. Rinne mit gekrümmter Bodenfläche 93. In Fig. 12b ist ein Rastabschnitt 94 in der Form einer runden Wanne gezeigt, in deren Bodenfläche 95 eine Durchbrechung 96 ausgebildet ist. Der in Fig. 12c gezeigte Rastabschnitt 97 hat schräge Seitenflächen 98, die zu einer Durchbrechung 99 geöffnet sind.

Die Breite b und die Länge l der Rastabschnitte 86,87,92,94,97 ist jeweils an die Bemaßung der pyramidenförmigen Rastabschnitte 36,46 an der ersten Gelenkplatte angepasst. Die geometrische Form der Rastabschnitte einschließlich deren Tiefe beeinflusst die Stärke der Rastung der Gelenkverbindung bei eine entsprechend abgewinkelten Stellung der Glieder des Gliedermaßstabs.

Die Rastabschnitte der zweiten Gelenkplatte 24 aus Fig. 5a bis c und bei den anhand von Fig. 10, 11 sowie Fig. 12a, b und c erläuterten alternativen Ausführungsformen hierfür können etwa durch Stanzen und Tiefziehen einer Platte aus Federstahl hergestellt werden.

Die Fig. 12d zeigt als Rastabschnitt 100 bei einer alternativen Ausführungsform für die zweite Gelenkplatte eine eckige Einschlifffase bzw. Einkerbung 101. In der Fig. 12e ist ein als Einkerbung in Form einer runden Einschlifffase 103 gestalteter Rastabschnitt 102 gezeigt. Die Tiefe der jeweiligen Einschlifffase kann beispielsweise 0,2 mm betragen. Auch hier entsprechen die Breite b und Länge l der der Einschlifffasen 101,103 der Größe der pyramidenförmigen Rastabschnitte 36,34 an der zweiten Gelenkplatte.

Zusammenfassend ist folgendes festzuhalten: Die Erfindung bezieht sich auf einen Gliedermaßstab 10 mit langgestreckten flachen Gliedern 11,12, die paarweise gelenkig verbunden sind. Bei dem Gliedermaßstab ist eine Gelenkverbindung 14 mit einer Drehachse 16 vorgesehen. Die Gelenkverbindung 14 weist eine erste Gelenkplatte 21 auf, welche an einem ersten Glied 11 festgelegt ist. Sie umfasst eine zweite Gelenkplatte 24, die an einem zweiten Glied 12 befestigt ist. An der ersten Gelenkplatte 21 ist eine Federzunge 32,34 mit einem Rastabschnitt 36,46 ausgebildet, der mit einem ersten komplementären Rastabschnitt 62,66 und mit einem zweiten komplementären Rastabschnitt 64,68 an der zweiten Gelenkplatte 24 zusammenwirkt, um die Gelenkverbindung 14 in einer Einstellung und in einer von der ersten Einstellung verschiedenen zweiten Einstellung mittels Federkraft zu rasten, wenn das erste Glied 11 relativ zu dem zweiten Glied 12 um die Drehachse 16 geschwenkt wird. Bei einem Schwenken des ersten Gliedes 11 relativ zu dem zweiten Glied 12 rastet der an der Federzunge 32,34 der ersten Gelenkplatte 21 ausgebildete Rastabschnitt 36,46 mit dem zweiten komplementären Rastabschnitt 64,68 an der zweiten Gelenkplatte 24 in einer abgewinkelten Stellung zwischen einer eingefalteten und einer ausgefalteten Stellung der Glieder 11,12.

## Patentansprüche

1. Gliedermaßstab mit langgestreckten flachen Gliedern (11, 12), die paarweise gelenkig verbunden sind,
bei dem eine Gelenkverbindung (14) mit einer Drehachse (16) eine erste Gelenkplatte (21) aufweist, die an einem ersten Glied (11) festgelegt ist, und eine zweite Gelenkplatte (24) umfasst, welche an einem zweiten Glied (12) befestigt ist,
wobei an der ersten Gelenkplatte (21) eine Federzunge (32) mit einem Rastabschnitt (36) ausgebildet ist, der mit einem ersten komplementären Rastabschnitt (62, 66) und mit einem zweiten komplementären Rastabschnitt (64, 68) an der zweiten Gelenkplatte (24) zusammenwirkt, um die Gelenkverbindung (14) in einer ersten Einstellung und in einer von der ersten Einstellung verschiedenen zweiten Einstellung mittels Federkraft zu rasten, wenn das erste Glied (11) relativ zu dem zweiten Glied (12) um die Drehachse (16) geschwenkt wird,
**dadurch gekennzeichnet, dass**
bei einem Schwenken des ersten Glieds (11) relativ zu dem zweiten Glied (12) der an der ersten Federzunge (32, 34) der ersten Gelenkplatte (21) ausgebildete Rastabschnitt (36,46) mit dem zweiten komplementären Rastabschnitt (64, 68) an der zweiten Gelenkplatte (24) die Gelenkverbindung (14) zwischen einer eingefalteten und einer ausgefalteten Stellung der Glieder (11,12) in einer abgewinkelten Stellung rastet;
wobei die Federzunge (32) einen Rastabschnitt (36, 46) mit einer Deckenfläche (35, 45) und mit schrägen, zu einer Längskante des Gliedes weisenden Seitenflächen (38, 39, 48, 49) hat, der bei einem Rasten in dem ersten komplementären Rastabschnitt (62, 66) an der zweiten Gelenkplatte (24) mit der Deckenfläche (35, 45) und mit den Seitenflächen (38, 39, 48, 49) in den entsprechenden ersten komplementären Rastabschnitt (62, 66) eingreift und der bei einem Rasten in dem zweiten komplementären Rastabschnitt (64, 68) nur mit einem Abschnitt an der Deckenfläche (35, 45) in dem entsprechenden zweiten komplementären Rastabschnitt (64, 68) an der zweiten Gelenkplatte (24) rastet.

2. Gliedermaßstab nach Anspruch 1, wobei das erste Glied (11) eine erste wannenartige Ausnehmung (77) aufweist, in welche die erste Federzunge (32) mit ihrem Rastabschnitt (36) bei einem Verstellen der Gelenkverbindung (14) eintauchen kann.

3. Gliedermaßstab nach Anspruch 1 oder 2, wobei das zweite Glied (12) eine wannenartige Ausnehmung (79, 80) aufweist, in welcher der erste komplementäre Rastabschnitt (62, 66) der zweiten Gelenkplatte (24) aufgenommen ist.

4. Gliedermaßstab nach einem der Ansprüche 1 bis 3, wobei der Rastabschnitt (36, 46) der Federzunge (32, 34) eine aus der Federzunge (32, 34) ragende Erhebung ist, die als ein Pyramidenstumpf (36, 46) ausgebildet ist, der eine zur Drehachse (16) der Gelenkverbindung (14) weisende, langgestreckte schräge Flanke (40,50) hat.

5. Gliedermaßstab nach einem der Ansprüche 1 bis 4, wobei der erste komplementäre Rastabschnitt (62, 66) in der zweiten Gelenkplatte (24) als eine Vertiefung ausgebildet ist.

6. Gliedermaßstab nach einem der Ansprüche 1 bis 5, wobei der zweite komplementäre Rastabschnitt (64, 68) eine seitliche Aussparung in der zweiten Gelenkplatte (24) ist.

7. Gliedermaßstab nach Anspruch 6, wobei die seitliche Aussparung rechteckförmig ist.

8. Gliedermaßstab nach einem der Ansprüche 1 bis 5, wobei der zweite komplementäre Rastabschnitt als eine Vertiefung in der zweiten Gelenkplatte (24) ausgebildet ist.

9. Gliedermaßstab nach Anspruch 8, wobei die Vertiefung eine gekrümmte Bodenfläche (93) oder eine ebene Bodenfläche (88, 89) hat oder dass in der Vertiefung eine Durchbrechung ausgebildet ist.

10. Gliedermaßstab nach einem der Ansprüche 1 bis 9, wobei die Federzunge (32) an der ersten Gelenkplatte (21) eine erste Federzunge ist und an der ersten Gelenkplatte (21) zusätzlich eine zweite Federzunge (34) mit einem Rastabschnitt (46) ausgebildet ist, der mit dem ersten komplementären Rastabschnitt (62, 66) und mit dem zweiten komplementären Rastabschnitt (64, 68) an der zweiten Gelenkplatte (24) zusammenwirkt, um die Gelenkverbindung (14) in einer ersten Einstellung und in einer von der ersten Einstellung verschiedenen zweiten Einstellung mittels Federkraft zu rasten, wenn das erste Glied (11) relativ zu dem zweiten Glied (12) um die Drehachse (16) geschwenkt wird,
wobei bei einem Schwenken des ersten Glieds (11) relativ zu dem zweiten Glied (12) der an der zweiten Federzunge (32, 34) der ersten Gelenkplatte (21) ausgebildete Rastabschnitt (36, 46) mit dem zweiten komplementären Rastabschnitt (64, 68) an der zweiten Gelenkplatte (24) die Gelenkverbindung (14) zwischen einer eingefalteten und einer ausgefalteten Stellung der Glieder (11,12) in einer abgewinkelten Stellung rastet,
wobei die erste Federzunge (32) und die zweite Federzunge (34) jeweils mit dem ersten und mit einem weiteren ersten komplementären Rastabschnitt (62, 66) sowie mit dem zweiten und einem weiteren zweiten komplementären Rastabschnitt (64, 68) an der zweiten Gelenkplatte (24) zusammenwirken, um die Gelenkverbindung (14) in einer ersten Einstellung und in einer von der ersten Einstellung verschiedenen zweiten Einstellung mittels Federkraft zu rasten, wenn das erste Glied (11) relativ zu dem zweiten Glied (12) um die Drehachse (16) geschwenkt wird,
wobei bei einem Schwenken des ersten Glieds (11) relativ zu dem zweiten Glied (12) der an der ersten und der zweiten Federzunge (32, 34) der ersten Gelenkplatte (21) ausgebildete Rastabschnitt (36, 46) mit dem zweiten komplementären Rastabschnitt (64, 68) an der zweiten Gelenkplatte (24) die Gelenkverbindung (14) zwischen einer eingefalteten und einer ausgefalteten Stellung der Glieder (11, 12) in einer abgewinkelten Stellung rastet, und
wobei die zweite Federzunge (34) einen Rastabschnitt (36, 46) mit einer Deckenfläche (35, 45) und mit schrägen, zu einer Längskante des Gliedes weisenden Seitenflächen (38, 39, 48, 49) hat, der bei einem Rasten in einem der ersten komplementären Rastabschnitte (62, 66) an der zweiten Gelenkplatte (24) mit der Deckenfläche (35, 45) und mit den Seitenflächen (38, 39, 48, 49) in den entsprechenden ersten komplementären Rastabschnitt (62, 66) eingreift und der bei einem Rasten in einem der zweiten komplementären Rastabschnitte (64, 68) nur mit einem Abschnitt an der Deckenfläche (35, 45) in dem entsprechenden zweiten komplementären Rastabschnitt (64, 68) an der zweiten Gelenkplatte (24) rastet.

11. Gliedermaßstab nach Anspruch 10, wobei das erste Glied (11) eine erste wannenartige Ausnehmung (77) aufweist, in welche die erste Federzunge (32) mit ihrem Rastabschnitt (36) bei einem Verstellen der Gelenkverbindung (14) eintaucht, und eine zweite wannenartige Ausnehmung (78) aufweist, in welche die zweite Federzunge (34) mit ihrem Rastabschnitt (46) bei einem Verstellen der Gelenkverbindung (14) eintaucht, wobei
zwischen der ersten wannenartigen Ausnehmung (77) und der zweiten wannenartigen Ausnehmung (78) ein die Gelenkverbindung (14) stabilisierender Stegabschnitt (81) mit einer Durchgangsbohrung (28) für einen Nietbolzen (30) ausgebildet ist, der das erste Glied (11) und das zweite Glied (12) an den einander zugewandten Breitseitenflächen (5,6) zusammendrückt; und
das zweite Glied (12) eine erste und eine zweite wannenartige Ausnehmung (79, 80) aufweist, zwischen denen ein die Gelenkverbindung stabilisierender, sich unter der zweiten Gelenkplatte (24) zwischen den beiden zweiten komplementären Rastabschnitten (64, 68) erstreckender Stegabschnitt (82) mit einer Durchgangsbohrung (29) für den Nietbolzen (30) ausgebildet ist, wobei in der ersten und zweiten wannenartigen Ausnehmung (79, 80) jeweils einer der beiden ersten komplementären Rastabschnitte (62, 66) der zweiten Gelenkplatte (24) aufgenommen ist.

12. Gliedermaßstab nach Anspruch 10 oder 11, wobei der Rastabschnitt (36, 46) der zweiten Federzunge (34) eine aus der Federzunge (32, 34) ragende Erhebung (36, 46) ist.

13. Gliedermaßstab nach Anspruch 12, wobei die aus der Federzunge (32, 34) ragende Erhebung als Pyramidenstumpf (36, 46) ausgebildet ist.

14. Gliedermaßstab nach Anspruch 13, wobei der Pyramidenstumpf (36, 46) eine zur Drehachse (16) der Gelenkverbindung (14) weisende, langgestreckte schräge Flanke (40,50) hat.

15. Gliedermaßstab nach einem der Ansprüche 10 bis 14, wobei der weitere erste komplementären Rastabschnitt (62, 66) eine Vertiefung in der zweiten Gelenkplatte (21) ist.

16. Gliedermaßstab nach Anspruch 15, wobei die Vertiefung als eine pyramidenstumpfförmige Vertiefung (62, 66) in der zweiten Gelenkplatte (21) geformt ist.

17. Gliedermaßstab nach einem der Ansprüche 10 bis 16, wobei der weitere zweite komplementäre Rastabschnitt eine seitliche Aussparung (64, 68) in der zweiten Gelenkplatte (24) ist.

18. Gliedermaßstab nach Anspruch 17, wobei die seitliche Aussparung (64,68) rechteckförmig ist.

19. Gliedermaßstab nach einem der Ansprüche 10 bis 16, wobei der weitere zweite komplementäre Rastabschnitt eine Vertiefung (88,89) in der zweiten Gelenkplatte (85) ist.

20. Gliedermaßstab nach Anspruch 19, wobei die Vertiefung (92) eine gekrümmte Bodenfläche (93) hat oder die Vertiefung (86,87) eine ebene Bodenfläche (88,89) hat oder wobei in der Vertiefung (96,99) eine Durchbrechung ausgebildet ist.

21. Gliedermaßstab nach einem der Ansprüche 10 bis 16, wobei wenigstens einer der beiden zweiten komplementären Rastabschnitte eine in der zweiten Gelenkplatte ausgebildete runde (103) oder eine eckige (101) Einschlifffase aufweist.

22. Gliedermaßstab nach einem der Ansprüche 1 bis 21, wobei das erste Glied (11) eine Versenkungsausnehmung (75) für die erste Gelenkplatte (21) hat und/oder das zweite Glied (12) eine Versenkungsausnehmung (76) für die zweite Gelenkplatte (24) hat.

## Claims

1. Folding rule comprising elongate flat members (11, 12) which are hingedly connected in pairs,
in which a hinge connection (14) having an axis of rotation (16) has a first hinge plate (21) which is fixed to a first member (11), and comprises a second hinge plate (24) which is fastened to a second member (12),
a spring tongue (32) which has a latching portion (36) being formed on the first hinge plate (21) and interacting with a first complementary latching portion (62, 66) and with a second complementary latching portion (64, 68) on the second hinge plate (24) in order to latch the hinge connection (14), by means of spring force, in a first setting and in a second setting different from the first setting when the first member (11) is pivoted relative to the second member (12) about the axis of rotation (16),
**characterized in that**
the latching portion (36, 46) formed on the first spring tongue (32, 34) of the first hinge plate (21), together with the second complementary latching portion (64, 68) on the second hinge plate (24), latching the hinge connection (14) in an angled position between a folded-in and a folded-out position of the members (11, 12) during pivoting of the first member (11) relative to the second member (12);
wherein the spring tongue (32) has a latching portion (36, 46) comprising a top surface (35, 45) and oblique lateral surfaces (38, 39, 48, 49) pointing toward a longitudinal edge of the member, which latching portion engages, by means of the top surface (35, 45) and the lateral surfaces (38, 39, 48, 49), in the corresponding first complementary latching portion (62, 66) during latching in the first complementary latching portion (62, 66) on the second hinge plate (24) and latches, by means of only one portion of the top surface (35, 45), in the corresponding second complementary latching portion (64, 68) on the second hinge plate (24) during latching in the second complementary latching portion (64, 68).

2. Folding rule according to claim 1, wherein the first member (11) has a first trough-like recess (77) into which the latching portion (36) of the first spring tongue (32) can be inserted during adjustment of the hinge connection (14).

3. Folding rule according to either claim 1 or claim 2, wherein the second member (12) has a trough-like recess (79, 80) in which the first complementary latching portion (62, 66) of the second hinge plate (24) is received.

4. Folding rule according to any of claims 1 to 3, wherein the latching portion (36, 46) of the spring tongue (32, 34) is a raised portion protruding from the spring tongue (32, 34) which has the form of a truncated pyramid (36, 46) which has an elongate oblique flank (40, 50) which points toward the axis of rotation (16) of the hinge connection (14).

5. Folding rule according to any of claims 1 to 4, wherein the first complementary latching portion (62, 66) in the second hinge plate (24) is designed as a depression.

6. Folding rule according to any of claims 1 to 5, wherein the second complementary latching portion (64, 68) is a lateral recess in the second hinge plate (24).

7. Folding rule according to claim 6, wherein the lateral recess is rectangular.

8. Folding rule according to any of claims 1 to 5, wherein the second complementary latching portion is designed as a depression in the second hinge plate (24).

9. Folding rule according to claim 8, wherein the depression has a curved bottom surface (93) or a planar bottom surface (88, 89) or in that an opening is formed in the depression.

10. Folding rule according to any of claims 1 to 9, wherein the spring tongue (32) on the first hinge plate (21) is a first spring tongue and additionally a second spring tongue (34) having a latching portion (46) is formed on the first hinge plate (21) which interacts with the first complementary latching portion (62, 66) and with the second complementary latching portion (64, 68) on the second hinge plate (24) in order to latch the hinge connection (14), by means of spring force, in a first setting and in a second setting different from the first setting when the first member (11) is pivoted relative to the second member (12) about the axis of rotation (16),
wherein the latching portion (36, 46) formed on the second spring tongue (32, 34) of the first hinge plate (21), together with the second complementary latching portion (64, 68) on the second hinge plate (24), latches the hinge connection (14) in an angled position between a folded-in and a folded-out position of the members (11, 12) during pivoting of the first member (11) relative to the second member (12),
wherein the first spring tongue (32) and the second spring tongue (34) each interact with the first and with a further first complementary latching portion (62, 66) and with the second and a further second complementary latching portion (64, 68) on the second hinge plate (24) in order to latch the hinge connection (14), by means of spring force, in a first setting and in a second setting different from the first setting when the first member (11) is pivoted relative to the second member (12) about the axis of rotation (16),
wherein the latching portion (36, 46) formed on the first and the second spring tongue (32, 34) of the first hinge plate (21), together with the second complementary latching portion (64, 68) on the second hinge plate (24), latches the hinge connection (14) in an angled position between a folded-in and a folded-out position of the members (11, 12) during pivoting of the first member (11) relative to the second member (12), and wherein the second spring tongue (34) has a latching portion (36, 46) comprising a top surface (35, 45) and oblique lateral surfaces (38, 39, 48, 49) pointing toward a longitudinal edge of the member, which latching portion engages, by means of the top surface (35, 45) and the lateral surfaces (38, 39, 48, 49), in the corresponding first complementary latching portion (62, 66) during latching in one of the first complementary latching portions (62, 66) on the second hinge plate (24) and latches, by means of only one portion of the top surface (35, 45), in the corresponding second complementary latching portion (64, 68) on the second hinge plate (24) during latching in one of the second complementary latching portions (64, 68).

11. Folding rule according to claim 10, wherein the first member (11) has a first trough-like recess (77) into which the latching portion (36) of the first spring tongue (32) is inserted during adjustment of the hinge connection (14), and has a second trough-like recess (78) into which the latching portion (46) of the second spring tongue (34) is inserted during adjustment of the hinge connection (14), wherein
a rib portion (81) which stabilizes the hinge connection (14) and comprises a through-bore (28) for a rivet pin (30) is formed between the first trough-like recess (77) and the second trough-like recess (78), which rivet pin presses together the first member (11) and the second member (12) on the mutually facing broad side surfaces (5, 6); and
the second member (12) has a first and a second trough-like recess (79, 80), between which a rib portion (82) is formed which stabilizes the hinge connection, extends underneath the second hinge plate (24) between the two second complementary latching portions (64, 68) and comprises a through-bore (29) for the rivet pin (30), wherein one of the two first complementary latching portions (62, 66) of the second hinge plate (24) is received in each case in the first and second trough-like recess (79, 80).

12. Folding rule according to either claim 10 or claim 11, wherein the latching portion (36, 46) of the second spring tongue (34) is a raised portion (36, 46) protruding from the spring tongue (32, 34).

13. Folding rule according to claim 12, wherein the raised portion protruding from the spring tongue (32, 34) is designed as a truncated pyramid (36, 46).

14. Folding rule according to claim 13, wherein the truncated pyramid (36, 46) has an elongate oblique flank (40, 50) which points toward the axis of rotation (16) of the hinge connection (14).

15. Folding rule according to any of claims 10 to 14, wherein the further first complementary latching portion (62, 66) is a depression in the second hinge plate (21).

16. Folding rule according to claim 15, wherein the depression is formed as a truncated pyramid-shaped depression (62, 66) in the second hinge plate (21).

17. Folding rule according to any of claims 10 to 16, wherein the further second complementary latching portion is a lateral recess (64, 68) in the second hinge plate (24).

18. Folding rule according to claim 17, wherein the lateral recess (64, 68) is rectangular.

19. Folding rule according to any of claims 10 to 16, wherein the further second complementary latching portion is a depression (88, 89) in the second hinge plate (85).

20. Folding rule according to claim 19, wherein the depression (92) has a curved bottom surface (93) or the depression (86, 87) has a planar bottom surface (88, 89) or wherein an opening is formed in the depression (96, 99).

21. Folding rule according to any of claims 10 to 16, wherein at least one of the two second complementary latching portions has a round (103) or an angular (101) ground-in bevel formed in the second hinge plate.

22. Folding rule according to any of claims 1 to 21, wherein the first member (11) has a sunken recess (75) for the first hinge plate (21) and/or the second member (12) has a sunken recess (76) for the second hinge plate (24).

## Revendications

1. Mètre pliant à maillons plats allongés (11, 12) articulés par paires,
dans lequel une articulation (14) dotée d'un axe de rotation (16) présente une première plaque d'articulation (21) qui est fixée à un premier maillon (11), et une seconde plaque d'articulation (24) qui est fixée à un second maillon (12),
la première plaque d'articulation (21) comprenant une languette à ressort (32) pourvue d'une section d'encliquetage (36), laquelle languette interagit avec une première section d'encliquetage complémentaire (62, 66) et avec une seconde section d'encliquetage complémentaire (64, 68) sur la seconde plaque d'articulation (24) afin d'enclencher l'articulation (14) dans un premier réglage et dans un second réglage différent du premier réglage au moyen d'une force de ressort lorsque le premier maillon (11) pivote par rapport au second maillon (12) autour de l'axe de rotation (16),
**caractérisé en ce que**
lors d'un pivotement du premier maillon (11) par rapport au second maillon (12), la section d'encliquetage (36, 46) formée au niveau de la première languette à ressort (32, 34) de la première plaque d'articulation (21) enclenche dans une position inclinée avec la seconde section d'encliquetage complémentaire (64, 68) située au niveau de la seconde plaque d'articulation (24), l'articulation (14) entre une position repliée et une position dépliée des maillons (11, 12) ;
la languette à ressort (32) possédant une section d'encliquetage (36, 46) pourvue d'une surface supérieure (35, 45) et de surfaces latérales (38, 39, 48, 49) obliques pointant vers un bord longitudinal du maillon qui, lors d'un enclenchement dans la première section d'encliquetage complémentaire (62, 66) sur la seconde plaque d'articulation (24) avec la surface supérieure (35, 45) et avec les surfaces latérales (38, 39, 48, 49) se loge dans la première section d'encliquetage complémentaire correspondante (62, 66) et qui, lors d'un enclenchement dans la seconde section d'encliquetage complémentaire (64, 68), ne s'enclenche qu'avec une section sur la surface supérieure (35, 45) dans la seconde section d'encliquetage complémentaire correspondante (64, 68) sur la seconde plaque d'articulation (24).

2. Mètre pliant selon la revendication 1, dans lequel le premier maillon (11) présente un premier évidement en forme d'auge (77) dans lequel la première languette à ressort (32) avec sa section d'encliquetage (36) peut pénétrer lorsque l'articulation (14) est ajustée.

3. Mètre pliant selon la revendication 1 ou 2, dans lequel le second maillon (12) présente un évidement en forme d'auge (79, 80) dans lequel est logée la première section d'encliquetage complémentaire (62, 66) de la seconde plaque d'articulation (24).

4. Mètre pliant selon l'une des revendications 1 à 3, dans lequel la section d'encliquetage (36, 46) de la languette à ressort (32, 34) forme une pyramide tronquée (36, 46) s'élevant en saillie hors de la languette à ressort (32, 34) et possédant un flanc oblique allongé (40, 50) orienté vers l'axe de rotation (16) de l'articulation (14).

5. Mètre pliant selon l'une des revendications 1 à 4, dans lequel la première section d'encliquetage complémentaire (62, 66) forme un renfoncement dans la seconde plaque d'articulation (24).

6. Mètre pliant selon l'une des revendications 1 à 5, dans lequel la seconde section d'encliquetage complémentaire (64, 68) est un évidement latéral dans la seconde plaque d'articulation (24).

7. Mètre pliant selon la revendication 6, dans lequel l'évidement latéral est rectangulaire.

8. Mètre pliant selon l'une des revendications 1 à 5, dans lequel la seconde section d'encliquetage complémentaire forme un renfoncement dans la seconde plaque d'articulation (24).

9. Mètre pliant selon la revendication 8, dans lequel le renfoncement possède une surface inférieure incurvée (93) ou une surface inférieure plane (88, 89) ou qu'une ouverture est formée dans le renfoncement.

10. Mètre pliant selon l'une des revendications 1 à 9, dans lequel la languette à ressort (32) sur la première plaque d'articulation (21) est une première languette à ressort et au niveau de la première plaque d'articulation (21) une seconde languette à ressort (34) est également formée avec une section d'encliquetage (46) qui interagit avec la première section d'encliquetage complémentaire (62, 66) et avec la seconde section d'encliquetage complémentaire (64, 68) sur la seconde plaque d'articulation (24) afin d'enclencher l'articulation (14) dans un premier réglage et dans un second réglage différent du premier réglage au moyen d'une force de ressort lorsque le premier maillon (11) pivote par rapport au second maillon (12) autour de l'axe de rotation (16),
dans lequel lors du pivotement du premier maillon (11) par rapport au second maillon (12), la section d'encliquetage (36, 46) formée au niveau de la seconde languette à ressort (32, 34) de la première plaque d'articulation (21) enclenche dans une position inclinée avec la seconde section d'encliquetage complémentaire (64, 68) située au niveau de la seconde plaque d'articulation (24), l'articulation (14) entre une position repliée et une position dépliée des maillons (11, 12),
dans lequel la première languette à ressort (32) et la seconde languette à ressort (34) interagissent respectivement avec la première et avec une autre première section d'encliquetage complémentaire (62, 66) ainsi qu'avec la seconde et une autre seconde section d'encliquetage complémentaire (64, 68) au niveau de la seconde plaque d'articulation (24) afin d'enclencher l'articulation (14) dans un premier réglage et dans un second réglage différent du premier réglage au moyen d'une force de ressort lorsque le premier maillon (11) pivote par rapport au second maillon (12) autour de l'axe de rotation (16),
dans lequel lors du pivotement du premier maillon (11) par rapport au second maillon (12), la section d'encliquetage (36, 46) formée au niveau de la première et de la seconde languette à ressort (32, 34) de la première plaque d'articulation (21) enclenche dans une position inclinée avec la seconde section d'encliquetage complémentaire (64, 68) située au niveau de la seconde plaque d'articulation (24), l'articulation (14) entre une position repliée et une position dépliée des maillons (11, 12), et
dans lequel la seconde languette à ressort (34) possède une section d'encliquetage (36, 46) pourvue d'une surface supérieure (35, 45) et de surfaces latérales (38, 39, 48, 49) obliques pointant vers un bord longitudinal du maillon qui, lors d'un enclenchement dans l'une des premières sections d'encliquetage complémentaires (62, 66) sur la seconde plaque d'articulation (24) pourvue d'une surface supérieure (35, 45) et de surfaces latérales (38, 39, 48, 49) se loge dans la première section d'encliquetage complémentaire correspondante (62, 66) et qui, lors d'un enclenchement dans l'une des secondes sections d'encliquetage complémentaires (64, 68), ne s'enclenche qu'avec une section sur la surface supérieure (35, 45) dans la seconde section d'encliquetage complémentaire correspondante (64, 68) sur la seconde plaque d'articulation (24).

11. Mètre pliant selon la revendication 10, dans lequel le premier maillon (11) présente un premier évidement en forme d'auge (77) dans lequel la première languette à ressort (32) pénètre avec sa section d'encliquetage (36) lors d'un ajustement de l'articulation (14), et présente un second évidement en forme d'auge (78) qui reçoit la seconde languette à ressort (34) avec sa section d'encliquetage (46) lors d'un ajustement de l'articulation (14), dans lequel
entre le premier évidement en forme d'auge (77) et le second évidement en forme d'auge (78) se forme une section d'âme (81) qui stabilise l'articulation (14) et dotée d'un alésage traversant (28) pour un boulon à sertir (30) qui comprime le premier maillon (11) et le second maillon (12) sur les larges surfaces latérales opposées (5, 6) ; et
le second maillon (12) présente un premier et un second évidements en forme d'auge (79, 80) entre lesquels se forme une section d'âme (82) qui stabilise l'articulation, s'étend sous la seconde plaque d'articulation (24) entre les deux secondes sections d'encliquetage complémentaires (64, 68) et possède un alésage traversant (29) pour le boulon à sertir (30), dans lequel l'une des deux premières sections d'encliquetage complémentaires (62, 66) de la seconde plaque d'articulation (24) se loge dans le premier et le second évidements en forme d'auge (79, 80).

12. Mètre pliant selon la revendication 10 ou 11, dans lequel la section d'encliquetage (36, 46) de la seconde languette à ressort (34) s'élève en saillie (36, 46) hors de la languette à ressort (32, 34).

13. Mètre pliant selon la revendication 12, dans lequel la saillie s'élevant hors de la languette à ressort (32, 34) forme une pyramide tronquée (36, 46).

14. Mètre pliant selon la revendication 13, dans lequel la pyramide tronquée (36, 46) possède un flanc oblique allongé (40, 50) orienté vers l'axe de rotation (16) de l'articulation (14).

15. Mètre pliant selon l'une des revendications 10 à 14, dans lequel l'autre première section d'encliquetage complémentaire (62, 66) est un renfoncement dans la seconde plaque d'articulation (21).

16. Mètre pliant selon la revendication 15, dans lequel le renfoncement est formé comme un renfoncement en forme de pyramide tronquée (62, 66) dans la seconde plaque d'articulation (21).

17. Mètre pliant selon l'une des revendications 10 à 16, dans lequel l'autre seconde section d'encliquetage complémentaire est un évidement latéral (64, 68) dans la seconde plaque d'articulation (24).

18. Mètre pliant selon la revendication 17, dans lequel l'évidement latéral (64, 68) est rectangulaire.

19. Mètre pliant selon l'une des revendications 10 à 16, dans lequel l'autre seconde section d'encliquetage complémentaire est un renfoncement (88, 89) dans la seconde plaque d'articulation (85).

20. Mètre pliant selon la revendication 19, dans lequel le renfoncement (92) a une surface inférieure incurvée (93) ou le renfoncement (86, 87) a une surface inférieure plane (88, 89) ou une ouverture est ménagée dans le renfoncement (96, 99).

21. Mètre pliant selon l'une des revendications 10 à 16, dans lequel au moins l'une des deux secondes sections d'encliquetage complémentairesprésente un chanfrein rainuré rond (103) ou angulaire (101) formé dans la seconde plaque d'articulation.

22. Mètre pliant selon l'une des revendications 1 à 21, dans lequel le premier maillon (11) possède un évidement d'abaissement (75) pour la première plaque d'articulation (21) et/ou le second maillon (12) possède un évidement d'abaissement (76) pour la seconde plaque d'articulation (24).
